(19) Europäisches Patentamt
European Patent Office
Office européen des brevets

(11) EP 3 162 867 A1

(12) EUROPEAN PATENT APPLICATION
published in accordance with Art. 153(4) EPC

(43) Date of publication:
**03.05.2017 Bulletin 2017/18**

(21) Application number: **15814770.2**

(22) Date of filing: **26.06.2015**

(51) Int Cl.:
***C09J 175/14*** *(2006.01)* ***C09J 4/00*** *(2006.01)*
***C09J 7/00*** *(2006.01)* ***C09J 11/06*** *(2006.01)*

(86) International application number:
**PCT/JP2015/068550**

(87) International publication number:
**WO 2016/002666 (07.01.2016 Gazette 2016/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **30.06.2014 JP 2014134175**

(71) Applicant: **The Nippon Synthetic Chemical Industry Co., Ltd.**
**Osaka-shi, Osaka 530-0018 (JP)**

(72) Inventor: **KANDA Kousou**
**Osaka-shi**
**Osaka 530-0018 (JP)**

(74) Representative: **Kuhnen & Wacker**
**Patent- und Rechtsanwaltsbüro**
**Prinz-Ludwig-Straße 40A**
**85354 Freising (DE)**

# (54) ACTIVE-ENERGY-RAY-CURABLE ADHESIVE COMPOSITION, ADHESIVE, AND ADHESIVE SHEET

(57) An active-energy-ray-curable pressure-sensitive adhesive composition comprising a urethane (meth)acrylate-based compound (A) obtained by reacting a polybutadiene-based polyol (a1), a polyvalent isocyanate-based compound (a2), and a hydroxyl group-containing (meth)acrylate-based compound (a3) and an ethylenically unsaturated monomer (B), wherein storage modulus at 23°C of a pressure-sensitive adhesive layer obtained by curing the composition by irradiation with an active energy ray is $1.0 \times 10^6$ or more and glass transition temperature of the pressure-sensitive adhesive layer is -30°C or lower.

EP 3 162 867 A1

## Description

### Technical Field

The present invention relates to an active-energy-ray-curable pressure-sensitive adhesive composition, a pressure-sensitive adhesive, and a pressure-sensitive adhesive sheet. More specifically, it relates to a pressure-sensitive adhesive composition that forms a pressure-sensitive adhesive showing excellent releasability even when exposed to a high-temperature environment at the time when used as a pressure-sensitive adhesive for a protective film, and a pressure-sensitive adhesive and a pressure-sensitive adhesive sheet using the same.

### Background Art

As pressure-sensitive adhesives, there exist various types such as strongly adhesive pressure-sensitive adhesive for the purpose of strongly attaching an adherend for a long period of time and a releasable-type pressure-sensitive adhesive that presupposes its release from an adherend after attachment, and the most suitable pressure-sensitive adhesive is designed and used in each of various fields.

For example, as the releasing-type pressure-sensitive adhesive on the premise of releasing it from an adherend, there may be mentioned a pressure-sensitive adhesive for a protective film that protects various members. As such a pressure-sensitive adhesive, there has been proposed an active-energy-ray-curable pressure-sensitive adhesive comprising a urethane (meth)acrylate-based compound [A] obtained by reacting a terminal isocyanate group-containing compound of a reaction product between a hydrogenated polybutadiene polyol (a1) and a polyisocyanate (a2) with a hydroxyl group-containing (meth)acrylate (a3) and an aliphatic or alicyclic alkyl acrylate having 6 or more carbon atoms [B] since the adhesive is excellent in the balance between adhesiveness to a substrate and weather resistance and also is useful as a pressure-sensitive adhesive to be used for various protective films (for example, see Patent Document 1).

### Related Art

### Patent Document

Patent Document 1: JP-A-2002-309185

### Summary of Invention

### Problems to Be Solved by the Invention

However, the technique disclosed in the above Patent Document 1 has a problem that, since the elastic modulus of the pressure-sensitive adhesive layer in a high-temperature region is low and the glass transition temperature of the pressure-sensitive adhesive layer is high, at the time of the use as a protective film, releasability from an adherend decreases when the protective film (pressure-sensitive adhesive layer) is exposed to a high-temperature environment, and thus there is still room for improvement.

Accordingly, in the present invention, under such backgrounds, an object thereof is to provide a pressure-sensitive adhesive composition that forms a pressure-sensitive adhesive showing excellent releasability even when exposed to a high-temperature environment at the time of the use as a pressure-sensitive adhesive for a protective film, and further to provide a pressure-sensitive adhesive and a pressure-sensitive adhesive sheet.

### Means for Solving the Problems

As a result of extensive studies in consideration of such circumstances, the present inventor has found that, in an active-energy-ray-curable pressure-sensitive adhesive composition containing a urethane (meth)acrylate-based compound and an ethylenically unsaturated monomer, a pressure-sensitive adhesive showing excellent releasability even when exposed to high-temperature environment at the time of the use as a pressure-sensitive adhesive for a protective film is obtained by making the storage modulus of the pressure-sensitive adhesive layer at the time of curing by irradiation with an active energy ray higher than usual and by making the glass transition temperature of the pressure-sensitive adhesive layer lower than usual, and thus he has accomplished the present invention.

Moreover, he has found that, in an active-energy-ray-curable pressure-sensitive adhesive composition containing a urethane (meth)acrylate-based compound and an ethylenically unsaturated monomer, a pressure-sensitive adhesive showing excellent releasability even when exposed to high-temperature environment at the time of the use as a pressure-sensitive adhesive for a protective film is obtained by using a compound obtained by reacting a polybutadiene-based polyol as the urethane (meth)acrylate-based compound and using a polybutadiene-based polyol containing a larger amount of a polybutadiene structure obtained through 1,4-bond of butadiene than a usual amount as the polybutadiene-based polyol, and thus he has accomplished the invention.

The reasons are as follows. In the pressure-sensitive adhesive using a conventional polybutadiene-based polyol-containing urethane (meth)acrylate-based compound, as the polybutadiene-based polyol, a butadiene-based polyol having a large amount of a polybutadiene structure obtained from 1,2-bond of butadiene is used and pressure-sensitive adhesive force and adhesive force are excellent but, since crystallinity is relatively low, the releasability from an adherend decreases and adhesive deposit is generated when the adhesive is exposed to a high-temperature environment. On the other hand, by using a polybutadiene structure obtained through 1,4-bond of butadiene as the polybutadiene-based polyol and by using the polybutadiene-based polyol containing a larger amount of the structure than usual, crystallinity increases and thus a pressure-sensitive adhesive excellent in both of the pressure-sensitive adhesive force and the releasability is obtained.

Namely, the gist of the invention relates to an active-energy-ray-curable pressure-sensitive adhesive composition comprising a urethane (meth)acrylate-based compound (A) obtained by reacting a polybutadiene-based polyol (a1), a polyvalent isocyanate-based compound (a2), and a hydroxyl group-containing (meth)acrylate-based compound (a3) and an ethylenically unsaturated monomer (B) (provided that (A) is excluded), wherein storage modulus at 23°C of a pressure-sensitive adhesive layer obtained by curing the composition by irradiation with an active energy ray is $1.0\times10^6$ or more and glass transition temperature of the pressure-sensitive adhesive layer is -30°C or lower.

Moreover, the gist of the invention also relates to an active-energy-ray-curable pressure-sensitive adhesive composition comprising a urethane (meth)acrylate-based compound (A) obtained by reacting a polybutadiene-based polyol (a1), a polyvalent isocyanate-based compound (a2), and a hydroxyl group-containing (meth)acrylate-based compound (a3) and an ethylenically unsaturated monomer (B) (provided that (A) is excluded), wherein the polybutadiene-based polyol (a1) is a polybutadiene-based polyol containing 15 mol% or more of a polybutadiene structure which is obtained through 1,4-bond of butadiene.

Furthermore, the invention also provides a pressure-sensitive adhesive obtained by curing the pressure-sensitive adhesive composition and a pressure-sensitive adhesive sheet using the same.

Effects of the Invention

The active-energy-ray-curable pressure-sensitive adhesive composition of the present invention can form a pressure-sensitive adhesive showing excellent releasability at the time of the use as a pressure-sensitive adhesive for a protective film, and the pressure-sensitive adhesive and further the pressure-sensitive adhesive sheet using the same are suitably used for an active-energy-ray-curable pressure-sensitive adhesive composition that may be used for attaching an optical display or a touch sensor and also are suitably used in uses of the optical displays or touch panels attached using the same, uses of solar cell back sheets, uses of encapsulating organic EL displays, uses of food packaging, uses of gas barrier films, and the like.

Embodiments for Carrying Out the Invention

The following will describe the present invention in detail.

Incidentally, in the invention, (meth)acrylic acid means acrylic acid or methacrylic acid, (meth)acryl means acryl or methacryl, (meth)acryloyl means acryloyl or methacryloyl, and (meth)acrylate means acrylate or methacrylate. Also, an acrylic resin means a resin obtained by polymerizing a polymerization component containing at least one (meth)acrylate-based monomer.

The active-energy-ray-curable pressure-sensitive adhesive composition of the invention comprises a urethane (meth)acrylate-based compound (A) and an ethylenically unsaturated monomer (B) and is a pressure-sensitive adhesive composition wherein storage modulus at 23°C of a pressure-sensitive adhesive layer obtained by curing the composition by irradiation with an active energy ray is $1.0\times10^6$ or more and glass transition temperature of the pressure-sensitive adhesive layer is - 30°C or lower.

Herein, the storage modulus corresponds to a real number part of one obtained when a sine wave-like force imparted to a sample and a strain generated at the time of imparting the force are shown on a complex plane, is a mechanically detectable apparent element, is a value that indicates hardness of the sample, and is measured as follows.

(Measurement Method)

An active-energy-ray-curable pressure-sensitive adhesive composition is applied to a releasable polyethylene terephthalate (PET) film (thickness: 50 μm) using an applicator so as to be a film thickness of 175 μm, irradiated with an ultraviolet ray under conditions of 80 W/cm (high-pressure mercury lamp)×18 cmHx2.04 m/min×3 pass (integration:

2,400 mJ/cm$^2$), and is cured to form an pressure-sensitive adhesive sheet in a desktop UV irradiation device ("conveyor-type desktop irradiation device" manufactured by Iwasaki Electric Co., Ltd.). The pressure-sensitive adhesive sheet was cut into a length of 20 mm$\times$a width of 3 mm to make a test piece and, a real number part of a complex modulus obtained by measurement for the test piece under conditions of a frequency of 1 Hz, a temperature-elevating rate of 3°C/minute, and a strain of 0.1 % using a tensile mode of a dynamic viscoelasticity measuring apparatus "DVA-225" manufactured by IT Keisoku Seigyo K.K. is taken as the storage modulus of the invention.

Moreover, the glass transition temperature is a temperature at which glass transition is generated on a polymer substance (temperature at which the substance changes from a supercooled state into a glass state), and is measured as follows.

(Measurement Method)

A ratio (tan $\delta$) of the imaginary part (loss modulus) to the real number part (storage modulus) of the complex modulus obtained by the measurement of the above storage modulus is determined, and maximum peak temperature of the tan $\delta$ is taken as the glass transition temperature (°C).

The urethane (meth)acrylate-based compound (A) to be used in the invention is obtained by reacting a polybutadiene-based polyol (a1), a polyvalent isocyanate-based compound (a2), and a hydroxyl group-containing (meth)acrylate-based compound (a3).

The polybutadiene-based polyol (a1) in the invention includes a polybutadiene polyol having a polybutadiene structure obtained by polymerizing butadiene and two or more hydroxyl groups in the molecule and a hydrogenated polybutadiene polyol obtained by hydrogenating all or part of the ethylenically unsaturated groups contained in the above polybutadiene polyol.

The polybutadiene structure may be any of a polybutadiene structure in which 1,3-butadiene is trans-1,4-bonded, a polybutadiene structure in which 1,3-butadiene is cis-1,4-bonded, and a polybutadiene polyol in which 1,3-butadiene is 1,2-bonded, and also may be a polybutadiene structure in which these bonds are mixed.

Of these, in view of an increase in the storage modulus, the polybutadiene structure in which 1,3-butadiene is trans- and cis-1,4-bonded is contained in a ratio of preferably 15 mol% or more, particularly preferably 15 to 50 mol%, further preferably 20 to 45 mol%, especially preferably 25 to 40 mol%.

When the content ratio of the polybutadiene structure in which 1,3-butadiene is 1,4-bonded is too low, the storage modulus of the pressure-sensitive adhesive layer tends to decrease, and when the ratio is too high, the crystallinity of the pressure-sensitive adhesive layer becomes high and there is a tendency that the adhesiveness to an adherend decreases.

Examples of the polybutadiene polyol include trade names "NISSO-PB G-1000", "NISSO-PB G-2000", and "NISSO-PB G-3000" manufactured by Nippon Soda Co., Ltd.; trade names "Poly bd R-45HT" and "Poly bd R-15HT" manufactured by Idemitsu Kosan Co., Ltd.; trade names "Krasol LBH-P2000" and "Krasol LBH-P3000" manufactured by CRAYVALLEY Company; and the like.

Examples of the hydrogenated polybutadiene polyol include trade names "NISSO-PB GI-1000", "NISSO-PB GI-2000", and "NISSO-PB GI-3000" manufactured by Nippon Soda Co., Ltd.; trade names "Krasol HLBH-P2000" and "Krasol HLBH-P3000" manufactured by CRAYVALLEY Company; and the like.

Moreover, the hydrogenation ratio of the hydrogenated polybutadiene polyol is preferably 90% or more, particularly preferably 93% or more, and further preferably 95% or more. When the hydrogenation ratio is too low, the storage stability tends to decrease.

In the invention, in view of excellent storage stability, the hydrogenated polybutadiene polyol is preferable as the polybutadiene-based polyol (a1).

The number-average molecular weight of the polybutadiene-based polyol (a1) is preferably 300 to 10,000, particularly preferably 500 to 8,000, and further preferably 1,000 to 6,000. When the number-average molecular weight is too high, the composition becomes highly viscous and workability tends to decrease. When it is too low, there is a tendency that sufficient adhesive strength is difficult to obtain.

Incidentally, the number-average molecular weight is a value determined according to the following equation.

[Num 1]

$$\text{Number-Average Molecular Weight (Mn)} = \frac{56110 \times \text{Number of Functional groups}(F)}{\text{Hydroxyl value}(mgKOH)}$$

Incidentally, the number of functional groups (F) represents the number of hydroxyl groups contained in one molecule.

The hydroxyl value of the polybutadiene-based polyol (a1) is preferably 10 to 400 mgKOH/g, particularly preferably 20 to 300 mgKOH/g, and further preferably 30 to 250 mgKOH/g. When the hydroxyl value is too high, the urethane (meth)acrylate-based compound becomes low molecular weight one and the adhesive strength tends to decrease, and when the value is too low, the composition becomes highly viscous and workability tends to decrease.

(Measurement Method)

The hydroxyl value can be measured based on JIS K 0070-1992.

Examples of the polyvalent isocyanate-based compound (a2) include aromatic polyisocyanates such as tolylene diisocyanate, diphenylmethane diisocyanate, polyphenylmethane polyisocyanate, modified diphenylmethane diisocyanate, xylylene diisocyanate, tetramethylxylylene diisocyanate, phenylene diisocyanate, and naphthalene diisocyanate; aliphatic polyisocyanates such as pentamethylene diisocyanate, hexamethylene diisocyanate, trimethylhexamethyelen diisocyanate, lysine diisocyanate, and lysine triisocyanate; alicyclic polyisocyanates such as hydrogenated diphenylmethane diisocyanate, hydrogenated xylylene diisocyanate, isophorone diisocyanate, norbornene diisocyanate, 1,3-bis(isocyanatomethyl)cyclohexane; or trimeric compounds or multimeric compounds of these polyisocyanates, allophanate-type polyisocyanates, biuret-type polyisocyanates, water-dispersed polyisocyanates, and the like.

Of these, from the viewpoint of stability at the urethanization reaction, diisocyanate-based compounds are preferred and particularly, preferably used are aliphatic diisocyanates such as pentamethylene diisocyanate, hexamethylene diisocyanate, trimethylhexamethyelen diisocyanate, and lysine diisocyanate and alicyclic diisocyanates such as hydrogenated diphenylmethane diisocyanate, hydrogenated xylylene diisocyanate, isophorone diisocyanate, norbornene diisocyanate, and 1,3-bis(isocyanatomethyl)cyclohexane. In view of excellent reactivity and versability, hydrogenated xylylene diisocyanate and isophorone diisocyanate are used.

Moreover, the polyvalent isocyanate-based compound may be used singly or two or more thereof may be used in combination.

Examples of the hydroxyl group-containing (meth)acrylate-based compound (a3) include:

hydroxyalkyl (meth)acrylates including alkyl group having carbon number of 2 to 22 (preferably 2 to 18) such as 2-hydroxyethyl (meth)acrylate, 2-hydroxypropyl (meth)acrylate, 2-hydroxybutyl (meth)acrylate, 4-hydroxybutyl (meth)acrylate, and 6-hydroxyhexyl (meth)acrylate;

hydroxyl group-containing polyoxyalkylene mono(meth)acrylates such as dipropylene glycol (meth)acrylate, polyethylene glycol mono(meth)acrylate, polypropylene glycol mono(meth)acrylate, polyethylene glycol-polypropylene glycol mono(meth)acrylate, poly(ethylene glycol-tetramethylene glycol) mono(meth)acrylate, and poly(propylene glycol-tetramethylene glycol) mono(meth)acrylate;

(meth)acrylate-based compounds containing one ethylenically unsaturated group, such as 2-hydroxyethylacryloyl phosphate, 2-(meth)acryloyloxyethyl-2-hydroxypropyl phthalate, caprolactone-modified 2-hydroxyethyl (meth)acrylate, aliphatic acid-modified-glycidyl (meth)acrylate, and 2-hydroxy-3-(meth)acryloyloxypropyl (meth)acrylate;

(meth)acrylate-based compounds containing two ethylenically unsaturated groups, such as glycerin di(meth)acrylate and 2-hydroxy-3-acryloyloxypropyl methacrylate; and

(meth)acrylate-based compounds containing three or more ethylenically unsaturated groups, such as pentaerythritol tri(meth)acrylate, caprolactone-modified pentaerythritol tri(meth)acrylate, ethylene oxide-modified pentaerythritol tri(meth)acrylate, dipentaerythritol penta(meth)acrylate, caplolactone-modified dipentaerythritol penta(meth)acrylate, and ethylene oxide-modified dipentaerythritol penta(meth)acrylate. The hydroxyl group-containing (meth)acrylate-based compound (a3) may be used singly or two or more thereof may be used in combination.

Of the above hydroxyl group-containing (meth)acrylate-based compounds (a3), the (meth)acrylate-based compounds containing one ethylenically unsaturated group are preferred and, from the viewpoint of improving initial pressure-sensitive adhesive force, it is particularly preferable to use the hydroxyl group-containing polyoxyalkylene mono(meth)acrylates, and further preferred is a compound represented by the following general formula (1).

[Chem 1]

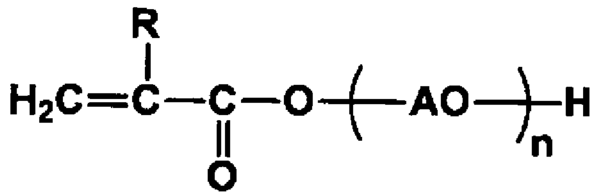

(1)

wherein R represents a hydrogen atom or a methyl group, A represents an alkylene group, n represents an average repeating number, and n is 2 to 20. A is one or two or more kinds and, in the case of two or more kinds, the repeating units may be arranged in a random manner or may be arranged in a block manner.

Of the compounds represented by the above general formula (1), A is preferably an alkylene group having 1 to 6 carbon atoms, and more preferred are polyoxypropylene mono(meth)acrylate where A is a propylene group and polyoxyethylene mono(meth)acrylate where A is an ethylene group and particularly preferred is polyoxypropylene mono(meth)acrylate.

Furthermore, in the general formula (1), the average repeating number n of oxyalkylene is preferably 3 to 14 and more preferably 4 to 13.

In the invention, the urethane (meth)acrylate-based compound (A) can be produced as follows.

For example, there may be mentioned (1) a method of charging the above hydroxyl group-containing (meth)acrylate-based compound (a3), polyvalent isocyanate-based compound (a2), and polybutadiene-based polyol (a1) together or separately into a reactor and reacting them and (2) a method of reacting a reaction product obtained by reacting the polybutadiene-based polyol (a1) and the polyvalent isocyanate-based compound (a2) beforehand with the hydroxyl group-containing (meth)acrylate-based compound (a3). From the viewpoint of stability of the reaction and reduction of by-products, the method of (2) is preferred.

In the reaction between the polybutadiene-based polyol (a1) and the polyvalent isocyanate-based compound (a2), a known reaction means can be used. On this occasion, for example, by controlling the molar ratio of the isocyanate group in the polyvalent isocyanate-based compound (a2) to the hydroxyl group in the polybutadiene-based polyol (a1) to usually about 2n/(2n-2) (n is an integer of 2 or more), a terminal isocyanate group-containing urethane (meth)acrylate-based compound in which the isocyanate group remains can be obtained and, after the compound is obtained, it becomes possible to perform an addition reaction with the hydroxyl group-containing (meth)acrylate-based compound (a3).

Also in the addition reaction of the reaction product obtained by reacting the polybutadiene-based polyol (a1) and the polyvalent isocyanate-based compound (a2) beforehand with the hydroxyl group-containing (meth)acrylate-based compound (a3), a known reaction means can be used.

With regard to the reaction molar ratio of the reaction product to the hydroxyl group-containing (meth)acrylate-based compound (a3), for example, in the case where the number of the isocyanate groups of the polyvalent isocyanate-based compound (a2) is two and the number of the hydroxyl group of the hydroxyl group-containing (meth)acrylate-based compound (a3) is one, the ratio of the reaction product to the hydroxyl group-containing (meth)acrylate-based compound (a3) is about 1/2 and, in the case where the number of the isocyanate groups of the polyvalent isocyanate-based compound (a2) is three and the number of the hydroxyl group of the hydroxyl group-containing (meth)acrylate-based compound (a3) is one, the ratio of the reaction product to the hydroxyl group-containing (meth)acrylate-based compound (a3) is about 1/3.

In the addition reaction between the reaction product and the hydroxyl group-containing (meth)acrylate-based compound (a3), the urethane (meth)acrylate-based compound (A) is obtained by terminating the reaction at the time point when the content of the remaining isocyanate group in the reaction system becomes 0.2% by weight or less.

In the reaction between the polybutadiene-based polyol (a1) and the polyvalent isocyanate-based compound (a2) and further the reaction between the reaction product and the hydroxyl group-containing (meth)acrylate-based compound (a3), it is preferable to use a catalyst for the purpose of promoting the reaction. Examples of the catalyst include organometallic compounds such as dibutyltin dilaurate, dibutyltin diacetate, trimethyltin hydroxide, tetra-n-butyltin, zinc bisacetylacetonate, zirconium tris(acetylacetonate) ethyl acetoacetate, and zirconium tetraacetylacetonate, metal salts such as tin octenoate, zinc hexanoate, zinc octenoate, zinc stearate, zirconium 2-ethylhexanoate, cobalt naphthenate, stannous chloride, stannic chloride, and potassium acetate, amine-based catalysts such as triethylamine, triethylenediamine, benzyldiethylamine, 1,4-diazabicyclo[2,2,2]octane, 1,8-diazabicyclo[5,4,0]undecene, N,N,N',N'-tetramethyl-1,3-butanediamine, N-methylmorpholine, and N-ethylmorpholine, bismuth-based catalysts such as bismuth nitrate, bismuth bromide, bismuth iodide, bismuth sulfide, also organic bismuth compounds such as dibutylbismuth dilaurate and dioctylbismuth dilaurate, and organic acid bismuth salts such as 2-ethylhexanoic acid bismuth salt, naphthenic acid bismuth salt, isodecanoic acid bismuth salt, neodecanoic acid bismuth salt, lauric acid bismuth salt, maleic acid bismuth salt, stearic acid bismuth salt, oleic acid bismuth salt, linoleic acid bismuth salt, acetic acid bismuth salt, bismuth bisneodecanoate, disalicylic acid bismuth salt, and digallic acid bismuth salt, and the like. Of these, dibutyltin dilaurate and

1,8-diazabicyclo[5,4,0]undecene are suitable. They may be used singly or two or more thereof may be used in combination.

Moreover, in the reaction between the polybutadiene-based polyol (a1) and the polyvalent isocyanate-based compound (a2) and further the reaction between the reaction product and the hydroxyl group-containing (meth)acrylate-based compound (a3), there may be used organic solvents which do not have a functional group that reacts with the isocyanate group, for example, organic solvents, e.g., esters such as ethyl acetate and butyl acetate, ketones such as methyl ethyl ketone and methyl isobutyl ketone, aromatics such as toluene and xylene, and the like, and ethylenically unsaturated monomers (for example, compounds such as the ethylenically unsaturated monomer (B) to be described later).

The reaction temperature is usually 30 to 90°C, and preferably 40 to 80°C and the reaction time is usually 2 to 10 hours, and preferably 3 to 8 hours.

The weight-average molecular weight of the urethane (meth)acrylate-based compound (A) is preferably 5,000 to 100,000, particularly preferably 8,000 to 80,000, and further preferably 10,000 to 50,000. When the weight-average molecular weight is too low, the pressure-sensitive adhesive force tends to decrease and, when the molecular weight is too high, the viscosity becomes exceedingly high, so that coating tends to become difficult.

Incidentally, the above-described weight-average molecular weight is weight-average molecular weight in terms of molecular weight of standard polystyrene and is measured by using three columns: Shodex GPC KF-806L (elimination limit molecular weight: $2\times10^7$, separation range: 100 to $2\times10^7$, theoretical plate number: 10,000 plates/column, filler material: styrene-divinylbenzene copolymer, filler particle size: 10 $\mu$m) in series on a high-performance liquid chromatography ("Shodex GPC system-11 model" manufactured by Showa Denko K.K.)

Moreover, with regard to viscosity of the urethane (meth)acrylate-based compound (A), the viscosity at 60°C is preferably 1,000 to 200,000 mPa.s, particularly preferably 2,000 to 100,000 mPa.s, and further preferably 3,000 to 80,000. When the viscosity is too high, the handling tends to become difficult and, when it is too low, the control of the film thickness at the time of coating tends to become difficult.

Incidentally, the measurement method of the viscosity uses an E-type viscometer.

As the ethylenically unsaturated monomer (B) to be used in the invention (provided that (A) is excluded) (hereinafter, sometimes described as "ethylenically unsaturated monomer (B)"), monofunctional monomers, bifunctional monomers, and trifunctional or polyfunctional monomers may be mentioned.

Examples of the monofunctional monomers include styrene-based monomers such as styrene, vinyltoluene, chlorostyrene, and $\alpha$-methylstyrene, (meth)acrylate-based monomers such as methyl (meth)acrylate, ethyl (meth)acrylate, acrylonitrile, 2-methoxyethyl (meth)acrylate, 2-hydroxyethyl (meth)acrylate, 2-hydroxypropyl (meth)acrylate, 2-hydroxybutyl (meth)acrylate, phenoxyethyl (meth)acrylate, 2-phenoxy-2-hydroxypropyl (meth)acrylate, 2-hydroxy-3-phenoxypropyl (meth)acrylate, 3-chloro-2-hydroxypropyl (meth)acrylate, glycerin mono(meth)acrylate, glycidyl (meth)acrylate, lauryl (meth)acrylate, cyclohexyl (meth)acrylate, isobornyl (meth)acrylate, tricyclodecanyl (meth)acrylate, dicyclopentenyl (meth)acrylate, dicyclopentenyloxyethyl (meth)acrylate, dicyclopentanyl (meth)acrylate, (2-methyl-2-ethyl-1,3-dioxolan-4-yl)-methyl (meth)acrylate, cyclohexane-spiro-2-(1,3-dioxolan-4-yl)-methyl (meth)acrylate, 3-ethyl-3-oxetanylmethyl (meth)acrylate, $\gamma$-butyrolactone (meth)acrylate, n-butyl (meth)acrylate, hexyl (meth)acrylate, heptyl (meth)acrylate, octyl (meth)acrylate, nonyl (meth)acrylate, decyl (meth)acrylate, isodecyl (meth)acrylate, dodecyl (meth)acrylate, n-stearyl (meth)acrylate, benzyl (meth)acrylate, phenol ethylene oxide-modified (n=2) (meth)acrylate, nonylphenol propylene oxide-modified (n=2.5) (meth)acrylate, 2-(meth)acryloyloxyethyl acid phosphate, half (meth)acrylates of phthalic acid derivatives such as 2-(meth)acryloyloxy-2-hydroxypropyl phthalate, furfuryl (meth)acrylate, tetrahydrofurfuryl (meth)acrylate, carbitol (meth)acrylate, benzyl (meth)acrylate, butoxyethyl (meth)acrylate, ally (meth)acrylate, (meth)acryloylmorpholine, and polyoxyethylene secondary alkyl ether acrylate, 2-hydroxyethylacrylamide, N-methylol(meth)acrylamide, N-vinylpyrrolidone, 2-vinylpyridine, vinyl acetate, and the like.

Examples of the bifunctional monomers include ethylene glycol di(meth)acrylate, diethylene glycol di(meth)acrylate, tetraethylene glycol di(meth)acrylate, polyethylene glycol di(meth)acrylate, propylene glycol di(meth)acrylate, dipropylene glycol di(meth)acrylate, polypropylene glycol di(meth)acrylate, butylene glycol di(meth)acrylate, neopentyl glycol di(meth)acrylate, ethylene oxide-modified bisphenol A-type di(meth)acrylate, propylene oxide-modified bisphenol A-type di(meth)acrylate, cyclohexanedimethanol di(meth)acrylate, ethoxylated cyclohexanedimethanol di(meth)acrylate, dimethyloldicyclopentane di(meth)acrylate, tricyclodecanedimethanol di(meth)acrylate, 1,6-hexanediol di(meth)acrylate, glycerin di(meth)acrylate, pentaerythritol di(meth)acrylate, ethylene glycol diglycidyl ether di(meth)acrylate, diethylene glycol diglycidyl ether di(meth)acrylate, phthalic acid diglycidyl ester di(meth)acrylate, hydroxypivalic acid-modified neopentyl glycol di(meth)acrylate, isocyanuric acid ethylene oxide-modified diacrylate, and the like.

Examples of the trifunctional or polyfunctional monomers include trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, tri(meth)acryloyloxyethoxytrimethylolpropane, glycerin polyglycidyl ether poly(meth)acrylate, isocyanuric acid ethylene oxide-modified triacrylate, caprolactone-modified dipentaerythritol penta(meth)acrylate, caprolactone-modified dipentaerythritol hexa(meth)acrylate, caprolactone-modified pentaerythritol tri(meth)acrylate, caprolactone-modified pentaerythritol tetra(meth)acrylate, ethylene oxide-modified dipentaerythritol penta(meth)acrylate, ethylene oxide-modified dipentaerythritol hexa(meth)acrylate, ethylene oxide-modified pentaerythritol tri(meth)acrylate, ethylene oxide-modified pentaerythritol tetra(meth)acrylate, ethoxylated glycerin triacrylate, and the like.

Moreover, it is also possible to use a Michael adduct of acrylic acid or 2-acryloyloxyethyl dicarboxylic acid monoester in combination and, as the Michael adduct of acrylic acid, there may be mentioned acrylic acid dimer, methacrylic acid dimer, acrylic acid trimer, methacrylic acid trimer, acrylic acid tetramer, methacrylic acid tetramer, and the like.

The 2-acryloyloxyethyl dicarboxylic acid monoester is a carboxylic acid having a specific substituent and examples thereof include 2-acryloyloxyethyl succinic acid monoester, 2-methacryloyloxyethyl succinic acid monoester, 2-acryloyloxyethyl phthalic acid monoester, 2-methacryloyloxyethyl phthalic acid monoester, 2-acryloyloxyethyl hexahydrophthalic acid monoester, 2-methacryloyloxyethyl hexahydrophthalic acid monoester, and the like. Furthermore, the other oligoester acrylates may be mentioned.

Of these, preferred are (meth)acrylates having low polarity such as isodecyl (meth)acrylate, lauryl (meth)acrylate, and cyclohexyl (meth)acrylate, and particularly preferred is isodecyl (meth)acrylate in view of excellent balance between compatibility and pressure-sensitive adhesive properties.

The content of the ethylenically unsaturated monomer (B) is preferably 5 to 900 parts by weight, particularly preferably 10 to 600 parts by weight, and further preferably 15 to 400 parts by weight relative to 100 parts by weight of the urethane (meth)acrylate-based compound (A). When the content is too large, the adhesiveness tends to decrease and, when it is too small, coating ability tends to decrease.

Thus, the active-energy-ray-curable pressure-sensitive adhesive composition of the invention is obtained.

In the invention, it is preferable to further incorporate a photopolymerization initiator (C) into the active-energy-ray-curable pressure-sensitive adhesive composition. The photopolymerization initiator (C) is not particularly limited as long as it generates radicals by the action of light and examples thereof include acetophenones such as diethoxyacetophenone, 2-hydroxy-2-methyl-1-phenylpropan-1-one, benzyl dimethyl ketal, 4-(2-hydroxyethoxy)phenyl-(2-hydroxy-2-propyl) ketone, 1-hydroxycyclohexyl phenyl ketone, 1-[4-(2-hydroxyethoxy)-phenyl]-2-hydroxy-2-methyl-1-propan-1-one, 2-methyl-2-morpholino(4-thiomethylphenyl)propan-1-one, 2-benzyl-2-dimethylamino-1-(4-morpholinophenyl)butanone, and 2-hydroxy-2-methyl-1-[4-(1-methylvinyl)phenyl]propanone oligomer; benzoins such as benzoin, benzoin methyl ether, benzoin ethyl ether, benzoin isopropyl ether, and benzoin isobutyl ether; benzophenones such as benzophenone, methyl o-benzoylbenzoate, 4-phenylbenzophenone, 4-benzoyl-4'-methyl-diphenyl sulfide, 3,3',4,4'-tetra(t-butylperoxycarbonyl)benzophenone, 2,4,6-trimethylbenzophenone, 4-benzoyl-N,N-dimethyl-N-[2-(1-oxy-2-propenyloxy)ethyl]benzenemetanamium bromide, and (4-benzoylbenzyl)trimethylammonium chloride; thioxanthones such as 2-isopropylthioxanthone, 4-isopropylthioxanthone, 2,4-diethylthioxanthone, 2,4-dichlorothioxanthone, 1-chloro-4-propoxythioxanthone, and 2-(3-dimethylamino-2-hydroxy)-3,4-dimethyl-9H-thioxanthon-9-one mesochloride; acylphosphone oxides such as 2,4,6-trimethylbenzoyl-diphenylphosphine oxide, bis(2,6-dimethoxybenzoyl)-2,4,4-trimethyl-pentylphosphine oxide, and bis(2,4,6-trimethylbenzoyl)-phenylphosphine oxide; and the like. Incidentally, these photopolymerization initiator (C) may be used singly or two or more thereof may be used in combination.

Moreover, as an auxiliary agent of the photopolymerization initiator (C), it is also possible to use triethanolamine, triisopropanolamine, 4,4'-dimethylaminobenzophenone (Michler's ketone), 4,4'-diethylaminobenzophenone, 2-dimethylaminoethylbenzoic acid, ethyl 4-dimethylaminobenzoate, (n-butoxy)ethyl 4-dimethylaminobenzoate, isoamyl 4-dimethylaminobenzoate, 2-ethylhexyl 4-dimethylaminobenzoate, 2,4-diethylthioxanthone, 2,4-diisopropylthioxanthone, or the like in combination. These auxiliary agents may be used singly or two or more thereof may be used in combination.

The blending amount of the photopolymerization initiator (C) is preferably 1 to 10 parts by weight, and particularly preferably 2 to 5 parts by weight relative to 100 parts by weight of the sum of the urethane (meth)acrylate-based compound (A) and the ethylenically unsaturated monomer (B). When the blending amount is too small, the curing rate tends to decrease and, when the amount is too large, the curing ability is not improved and economical efficiency tends to decrease.

Into the active-energy-ray-curable pressure-sensitive adhesive composition of the invention, it is also possible to blend an antioxidant, a flame retardant, an antistatic agent, a filler, a leveling agent, a stabilizer, a reinforcing agent, a delustering agent, and the like, in addition to the urethane (meth)acrylate-based compound (A), the ethylenically unsaturated monomer (B), and the photopolymerization initiator (C). In addition, as a crosslinking agent, it is also possible to use a compound having an action to cause crosslinking by heat, specifically an epoxy compound, an aziridine compound, a melamine compound, an isocyanate compound, a chelate compound, or the like.

Furthermore, the active-energy-ray-curable pressure-sensitive adhesive composition of the invention preferably contains a polythiol compound (D) or the like from the viewpoints of acceleration of the reaction rate, improvement in reaction efficiency, suppression of unreacted components, improvement in pressure-sensitive adhesive force, and the like.

The polythiol compound (D) is preferably a compound having 2 to 6 mercapto groups in the molecule and examples thereof include aliphatic polythiols such as alkanedithiols having about 2 to 20 carbon atoms, aromatic polythiols such as xylylene dithiol, polythiols obtained by substituting the halogen atoms of halohydrin adducts of alcohols with mercapto groups, polythiols composed of reaction products of polyepoxide compounds with hydrogen sulfide, polythiols

composed of products of esterification of polyhydric alcohols having 2 to 6 hydroxyl groups in the molecule with thioglycolic acid, β-mercaptopropionic acid, or β-mercaptobutanoic acid, and the like. One or two or more kinds thereof may be used.

In the case of blending the polythiol compound (D), the blending amount thereof is preferably 10 parts by weight or less, and particularly preferably 0.01 to 5 parts by weight relative to 100 parts by weight of the sum of the urethane (meth)acrylate-based compound (A) and the ethylenically unsaturated monomer (B).

Moreover, in the active-energy-ray-curable pressure-sensitive adhesive composition of the invention, if necessary, for adjusting the viscosity at coating, there may be used, for dilution, a diluting solvent, e.g., an alcohol such as methanol, ethanol, propanol, n-butanol, or i-butanol, a ketone such as acetone, methyl isobutyl ketone, methyl ethyl ketone, or cyclohexanone, a cellosolve such as ethylcello solve, an aromatic such as toluene or xylene, a glycol ether such as propylene glycol monomethyl ether, an acetic acid ester such as methyl acetate, ethyl acetate, or butyl acetate, diacetone alcohol, or the like. However, there is a possibility of remanence of the solvent in a coated film or evaporation of a curing component at drying, it is preferable that the composition does not substantially contain the solvent.

Incidentally, the fact that the composition does not substantially contain the solvent means that the content of the solvent is usually 1% by weight or less, preferably 0.5% by weight or less, and further preferably 0.1 % by weight or less relative to the entire active-energy-ray-curable pressure-sensitive adhesive composition.

The active-energy-ray-curable pressure-sensitive adhesive composition of the invention is usually applied to a substrate sheet or the like and is frequently subjected to practical use as a pressure-sensitive adhesive sheet (the pressure-sensitive adhesive sheet has a meaning including a pressure-sensitive adhesive film and a pressure-sensitive adhesive tape unless otherwise stated) or the like. After applied to the substrate sheet, the composition is crosslinked by irradiation with an active energy ray to form a pressure-sensitive adhesive and thus a pressure-sensitive adhesive property is exhibited.

Examples of the substrate sheet include resin sheets of polyester-based resins such as polyethylene terephthalate and polybutylene terephthalate, polyolefin-based resins such as polyethylene, polypropylene, and ethylene-propylene copolymers, polycarbonate-based resins, polyurethane-based resins, acrylic resins, polystyrene-based resins, ethylene-vinyl acetate copolymers, polyvinyl chloride, polybutene, polybutadiene, polymethylpentene, and acrylonitrile-butadiene-styrene copolymers (ABS) and glass sheets. As the various substrate sheets, there may be used those subjected to a surface treatment such as anchor layer formation, a corona treatment, or a plasma treatment.

A method of applying the active-energy-ray-curable pressure-sensitive adhesive composition is not particularly limited and, for example, there may be mentioned wet coating methods such as spray, shower, dipping, roll, spin, screen printing, and inkjet printing.

In the case of containing the solvent, drying is performed after application. As drying conditions, drying temperature and/or drying time sufficient for evaporating the solvent may be set and the drying temperature is usually 40 to 100°C, and particularly preferably 50 to 90°C. The drying time may be a time for which the solvent in the coated film can be completely evaporated at drying but, in view of appropriate production, is preferably 1 to 60 minutes.

After the active-energy-ray-curable pressure-sensitive adhesive composition of the invention is applied on the substrate sheet and dried, the composition is crosslinked by irradiation with an active energy ray to form a pressure-sensitive adhesive and further a pressure-sensitive adhesive sheet.

Moreover, until the pressure-sensitive adhesive sheet of the invention is attached to an adherend (member), for the purpose of protecting the pressure-sensitive adhesive from fouling, it is possible to laminate a separator on the surface of the pressure-sensitive adhesive. As the separator, it is possible to use the resin sheet exemplified above or those obtained by subjecting a substrate such as paper, fabric, or nonwoven fabric to a releasing treatment.

At the time of providing the pressure-sensitive adhesive composition on the substrate sheet, it is usually performed that the active-energy-ray-curable pressure-sensitive adhesive composition is applied to the substrate sheet as its solution after the viscosity is adjusted to a viscosity suitable for application with a solvent according to need and then dried. As a method for application, there may be mentioned a direct coating method of directly applying the solution-form active-energy-ray-curable pressure-sensitive adhesive composition to the substrate sheet, a transfer coating method of applying the solution-form active-energy-ray-curable pressure-sensitive adhesive composition to a separator and subsequently attaching it to the substrate sheet, and other method.

In the direct coating method, there may be mentioned a method of irradiating the active-energy-ray-curable pressure-sensitive adhesive composition with an active energy ray after the composition is applied to the substrate sheet and heated and dried and subsequently attaching a separator thereto, a method of attaching a separator after the active-energy-ray-curable pressure-sensitive adhesive composition is applied to the substrate sheet and heated and dried and subsequently irradiating the composition with an active energy ray, and other method. The application is performed by a method of roll coating, die coating, gravure coating, comma coating, screen printing, print-coating by a dispenser, or other method.

On the other hand, in the transfer coating method, there may be mentioned a method of irradiating the active-energy-ray-curable pressure-sensitive adhesive composition with an active energy ray after the composition is applied to a separator and heated and dried and subsequently attaching the substrate sheet thereto, a method of attaching the

substrate sheet after the active-energy-ray-curable pressure-sensitive adhesive composition is applied to a separator and heated and dried and subsequently irradiating the composition with an active energy ray, and the other method. As coating methods, the same methods as in the direct coating can be used.

As the active energy ray, there can be utilized rays such as a far ultraviolet ray, an ultraviolet ray, a near ultraviolet ray, and an infrared ray, electromagnetic waves such as an X-ray and a $\gamma$-ray, and also an electron beam, a proton beam, a neutron beam, and the like but, from the viewpoints of a curing rate, availability of an irradiation apparatus, prices, and the like, curing by irradiation with an ultraviolet ray is advantageous. Incidentally, in the case of performing irradiation with an electron beam, curing may be possible without using the photopolymerization initiator.

As a method of curing by irradiation with an ultraviolet ray, the irradiation may be carried out at about 30 to 5,000 mJ/cm$^2$ using a high-pressure mercury lamp, an ultrahigh-pressure mercury lamp, a carbon arc lamp, a metal halide lamp, a xenon lamp, a chemical lamp, a electrodeless discharge lamp, an LED, or the like that generates a light in a wavelength range of 150 to 450 nm.

After the irradiation with the ultraviolet ray, it is also possible to perform heating according to need, for complete curing.

Moreover, thickness of the pressure-sensitive adhesive layer formed on the substrate sheet after the irradiation with an active energy ray is appropriately set according to application uses but is usually 5 to 300 $\mu$m, and preferably 10 to 250 $\mu$m. When the thickness of the pressure-sensitive adhesive layer is too thin, the pressure-sensitive adhesive properties tend to be difficult to stabilize and, when it is too thick, adhesive deposit tends to be easily generated.

As for the thus obtained pressure-sensitive adhesive layer, it is important that the storage modulus at 23°C is $1.0\times10^6$ or more and the glass transition temperature of the pressure-sensitive adhesive layer is -30°C or lower, as described above. The storage modulus is preferably $1.0\times10^6$ to $1.0\times10^8$, particularly preferably $1.0\times10^6$ to $5.0\times10^7$, and further preferably $1.0\times10^6$ to $1.0\times10^7$. When the storage modulus is too small as compared to the lower limit, heat resistance becomes low and releasability gets worse.

Moreover, the glass transition temperature is preferably -60 to -30°C, particularly preferably -55 to -31°C, and further preferably -50 to -32°C. When the glass transition temperature is too large as compared to the upper limit, the pressure-sensitive adhesive force increases and the releasability get worse.

In the above, the pressure-sensitive adhesive force varies also depending on the kind of the adherend but, for example, against glass, initial pressure-sensitive adhesive force is, in 180° peeling strength in accordance with JIS Z 0237, preferably 3 N/25 mm or more, particularly preferably 5 N/25 mm or more, and further preferably 9 N/25 mm or more. On the other hand, the pressure-sensitive adhesive force after exposure under a high-temperature environment (after a heat resistance test) is preferably 3 N/25 mm or more, particularly preferably 5 N/25 mm or more, and further preferably 9 N/25 mm or more.

At the adjustment to the above storage modulus and the glass transition temperature, in particular, it is attained by controlling the crystallinity of the oligomer and regulating the crosslinking density to a suitable range.

Since the active-energy-ray-curable pressure-sensitive adhesive composition of the invention has releasability, the composition can be widely used as a pressure-sensitive adhesive sheet as a protective sheet or a temporary fixing sheet of surface of metal plates, glass plates, plastic plates, resin painted surfaces, and the like, i.e., a pressure-sensitive adhesive sheet for surface protection.

Moreover, it is also possible to use the active-energy-ray-curable pressure-sensitive adhesive composition of the invention as a sheet (tape) for electronic component fixation, a sheet (tape) for electronic component labeling, an attaching resin in optical displays or touch sensors. For example, it can be used for attachment of an optical display panel and a touch panel, attachment of an optical display panel and a protective panel, attachment of a touch panel and a protective panel, attachment of an optical display panel and an optical display panel, and attachment of an optical display panel and a parallax barrier. The attachment can be performed by a usual method.

## Examples

The following will further specifically describe the present invention with reference to Examples but the invention is not limited to the following Examples unless it exceeds the gist thereof. Incidentally, in examples, "part(s)" and "%" mean those based on weight.

Urethane (meth)acrylate-based compounds (A) were produced as follows.

<Production Example 1: Urethane (meth)acrylate-based compound (A-1)>

Into a four-necked flask equipped with a thermometer, a stirrer, a water-cooling condenser, and a nitrogen gas blowing inlet were charged 100.0 g (0.59 mol) of hexamethylene diisocyanate (a2-1) and 890.5 g (0.40 mol) of hydrogenated polybutadiene polyol (number-average molecular weight: 2,200, hydroxyl value: 49.9 mgKOH/g) containing 35 mol% of a 1,4-bonded polybutadiene structure (a1-1), and they were reacted at 70°C. At the time point when the remaining

isocyanate group decreased to 1.7%, temperature was lowered to 60°C and 88.6 g (0.41 mol) of 4-hydroxybutyl acrylate (a3-1) was added thereto and reacted. At the time point when the remaining isocyanate group decreased to 0.2%, the reaction was finished and a urethane (meth)acrylate-based compound (A-1) (weight-average molecular weight: 22,000) was obtained.

<Production Example 2: Urethane acrylate-based compound (A-2)>

Into a four-necked flask equipped with a thermometer, a stirrer, a water-cooling condenser, and a nitrogen gas blowing inlet were charged 100.0 g (0.45 mol) of isophorone diisocyanate (a2-2) and 673.7 g (0.30 mol) of hydrogenated polybutadiene polyol (number-average molecular weight: 2,200, hydroxyl value: 49.9 mgKOH/g) containing 35 mol% of a 1,4-bonded polybutadiene structure (a1-1), and they were reacted at 70°C. At the time point when the remaining isocyanate group decreased to 1.6%, temperature was lowered to 60°C and 44.3 g (0.31 mol) of 4-hydroxybutyl acrylate (a3-1) was added thereto and reacted. At the time point when the remaining isocyanate group decreased to 0.2%, the reaction was finished and a urethane acrylate-based compound (A-2) (weight-average molecular weight: 20,000) was obtained.

<Production Example 3: Urethane acrylate-based compound (A-3)>

Into a four-necked flask equipped with a thermometer, a stirrer, a water-cooling condenser, and a nitrogen gas blowing inlet were charged 100.0 g (0.38 mol) of dicyclohexylmethane 4,4'-diisocyanate (a2-3) and 571.0 g (0.25 mol) of hydrogenated polybutadiene polyol (number-average molecular weight: 2,200, hydroxyl value: 49.9 mgKOH/g) containing 35 mol% of a 1,4-bonded polybutadiene structure (a1-1), and they were reacted at 70°C. At the time point when the remaining isocyanate group decreased to 1.6%, temperature was lowered to 60°C and 37.6 g (0.26 mol) of 4-hydroxybutyl acrylate (a3-1) was added thereto and reacted. At the time point when the remaining isocyanate group decreased to 0.2%, the reaction was finished and a urethane acrylate-based compound (A-3) (weight-average molecular weight: 16,500) was obtained.

<Production Example 4: Urethane (meth)acrylate-based compound (A-4)>

A urethane (meth)acrylate-based compound (A-4) (weight-average molecular weight: 21,000) was obtained by the same reaction as in Production Example 1 except that 4-hydroxybutyl acrylate (a3-1) was changed to 182.4 g (0.41 mol) of polypropylene glycol monoacrylate (number-average molecular weight: 449, hydroxyl value: 125.0 mg-KOH/g) (a3-2) in which the average number of repeating units of oxypropylene n equals 6.

<Production Example 5: Urethane acrylate-based compound (A-5)>

A urethane (meth)acrylate-based compound (A-5) (weight-average molecular weight: 20,800) was obtained by the same reaction as in Production Example 2 except that 4-hydroxybutyl acrylate (a3-1) was changed to 138.0 g (0.31 mol) of polypropylene glycol monoacrylate (number-average molecular weight: 449, hydroxyl value: 125.0 mg-KOH/g) (a3-2) in which the average number of repeating units of oxypropylene n equals 6.

<Production Example 6: Urethane acrylate-based compound (A-6)>

A urethane (meth)acrylate-based compound (A-6) (weight-average molecular weight: 20,400) was obtained by the same reaction as in Production Example 3 except that 4-hydroxybutyl acrylate (a3-1) was changed to 117.0 g (0.26 mol) of polypropylene glycol monoacrylate (number-average molecular weight: 449, hydroxyl value: 125.0 mg-KOH/g) (a3-2) in which the average number of repeating units of oxypropylene n equals 6.

<Production Example 7: Urethane acrylate-based compound (A'-1)>

Into a four-necked flask equipped with a thermometer, a stirrer, a water-cooling condenser, and a nitrogen gas blowing inlet were charged 100.0 g (0.45 mol) of isophorone diisocyanate (a2-2) and 709.7 g (0.30 mol) of hydrogenated polybutadiene polyol (number-average molecular weight: 2,400, hydroxyl value: 47.4 mgKOH/g) containing 9 mol% of a 1,4-bonded polybutadiene structure (a'1-1), and they were reacted at 70°C. At the time point when the remaining isocyanate group decreased to 1.6%, temperature was lowered to 60°C and 44.3 g (0.31 mol) of 4-hydroxybutyl acrylate was added thereto and reacted. At the time point when the remaining isocyanate group decreased to 0.2%, the reaction was finished and a urethane acrylate-based compound (A'-1) (weight-average molecular weight: 17,000) was obtained.

The following Table 1 shows kinds and weight-average molecular weight of individual constitutional components

(a1) to (a3) of the urethane (meth)acrylate-based compounds (A-1) to (A-6) and (A'-1) produced as above.

[Table 1]

Table 1

| | Urethane (meth)acrylate-based compound (A) | Polybutadiene-based polyol (a1) | Polyvalent isocyanate-based compound (a2) | Hydroxyl group-containing (meth)acrylate-based compound (a3) | Weight-average molecular weight |
|---|---|---|---|---|---|
| Production Example 1 | A-1 | a1-1 | a2-1 | a3-1 | 22,000 |
| Production Example 2 | A-2 | a1-1 | a2-2 | a3-1 | 20,000 |
| Production Example 3 | A-3 | a1-1 | a2-3 | a3-1 | 16,500 |
| Production Example 4 | A-4 | a1-1 | a2-1 | a3-2 | 21,000 |
| Production Example 5 | A-5 | a1-1 | a2-2 | a3-2 | 20,800 |
| Production Example 6 | A-6 | a1-1 | a2-3 | a3-2 | 20,400 |
| Production Example 7 | A'-1 | a'1-1 | a2-2 | a3-1 | 17,000 |

The symbols in Table 1 represent the following compounds.

- a1-1: hydrogenated polybutadiene polyol (number-average molecular weight: 2,200, hydroxyl value: 49.9 mgKOH/g) containing 35 mol% of a 1,4-bonded polybutadiene structure
- a'1-1: hydrogenated polybutadiene polyol (number-average molecular weight: 2,400, hydroxyl value: 47.4 mgKOH/g) containing 9 mol% of a 1,4-bonded polybutadiene structure
- a2-1: hexamethylene diisocyanate
- a2-2: isophorone diisocyanate
- a2-3: dicyclohexylmethane 4,4'-diisocyanate
- a3-1: 4-hydroxybutyl acrylate
- a3-2: polypropylene glycol monoacrylate (average number of repeating units of oxypropylene n equals 6, number-average molecular weight: 449, hydroxyl value: 125.0 mgKOH/g)

The following was prepared as an ethylenically unsaturated monomer (B).

- (B-1): isodecyl acrylate (manufactured by Sartomer; trade name "SR-395")

The following was prepared as a photopolymerization initiator (C).

- (C-1): 1-hydroxy-cyclohexyl-phenyl-ketone (manufactured by BASF Japan Ltd.; trade name "Irgacure 184")

The following one was prepared as polythiol compounds (D).

- (D-1): pentaerythritol tetrakis(3-mercaptopropionate)
- (D-2): pentaerythritol tetrakis(3-mercaptobutyrate)

<Example 1>

Into 100 parts of the urethane (meth)acrylate-based compound (A-1) produced in the above Production Example 1 were homogeneously mixed 43 parts of the ethylenically unsaturated monomer (B-1) and 4 parts of the photopolymerization initiator (C-1), and thus an active-energy-ray-curable pressure-sensitive adhesive composition was obtained.

<Example 2>

An active-energy-ray-curable pressure-sensitive adhesive composition was obtained in the same manner as in Example 1 except that the urethane (meth)acrylate-based compound (A-2) produced in the above Production Example 2 was used instead of the urethane (meth)acrylate-based compound (A-1).

<Example 3>

An active-energy-ray-curable pressure-sensitive adhesive composition was obtained in the same manner as in Example 1 except that the urethane (meth)acrylate-based compound (A-3) produced in the above Production Example 3 was used instead of the urethane (meth)acrylate-based compound (A-1).

<Example 4>

An active-energy-ray-curable pressure-sensitive adhesive composition was obtained in the same manner as in Example 1 except that the urethane (meth)acrylate-based compound (A-4) produced in the above Production Example 4 was used instead of the urethane (meth)acrylate-based compound (A-1).

<Example 5>

An active-energy-ray-curable pressure-sensitive adhesive composition was obtained in the same manner as in Example 1 except that the urethane (meth)acrylate-based compound (A-5) produced in the above Production Example 5 was used instead of the urethane (meth)acrylate-based compound (A-1).

<Example 6>

An active-energy-ray-curable pressure-sensitive adhesive composition was obtained in the same manner as in Example 1 except that the urethane (meth)acrylate-based compound (A-6) produced in the above Production Example 5 was used instead of the urethane (meth)acrylate-based compound (A-1).

<Example 7>

An active-energy-ray-curable pressure-sensitive adhesive composition was obtained in the same manner as in Example 5 except that 0.5 parts of the polythiol compound (D-1) was further blended.

<Example 8>

An active-energy-ray-curable pressure-sensitive adhesive composition was obtained in the same manner as in Example 7 except that the polythiol compound (D-2) was used instead of (D-1).

<Example 9>

An active-energy-ray-curable pressure-sensitive adhesive composition was obtained in the same manner as in Example 6 except that 0.5 parts of the polythiol compound (D-2) was further blended.

<Comparative Example 1>

An active-energy-ray-curable pressure-sensitive adhesive composition was obtained in the same manner as in Example 1 except that the urethane (meth)acrylate-based compound (A'-1) produced in the above Production Example 7 was used instead of the urethane (meth)acrylate-based compound (A-1).

<Manufacture of Pressure-Sensitive Adhesive Sheet for Elastic Modulus Measurement>

Each of the active-energy-ray-curable pressure-sensitive adhesive compositions obtained in the above Examples 1 to 9 and Comparative Example 1 was applied to a releasable polyethylene terephthalate (PET) film (thickness: 50 $\mu$m) using an applicator so as to be a film thickness of 175 $\mu$m, irradiated with an ultraviolet ray under conditions of 80 W/cm (high-pressure mercury lamp)$\times$18 cmH$\times$2.04 m/min$\times$3 pass (integration: 2,400 mJ/cm$^2$) in a desktop UV irradiation device ("conveyor-type desktop irradiation device" manufactured by Iwasaki Electric Co., Ltd.), and thus cured

to thereby obtain an pressure-sensitive adhesive sheet for elastic modulus measurement.

<Storage Modulus>

(Measurement Method)

A test piece having a length of 20 mm and a width of 3 mm was cut out of the pressure-sensitive adhesive sheet obtained by the above method. Using the obtained test piece, measurement was performed at a frequency of 1 Hz, at a temperature-elevating rate of 3°C/minute, and at a strain of 0.1% using a tensile mode of a dynamic viscoelasticity measuring apparatus "DVA-225" manufactured by IT Keisoku Seigyo K.K.

<Glass Transition Temperature>

(Measurement Method)

A ratio (tan $\delta$) of the imaginary part (loss modulus) to the real number part (storage modulus) of the complex modulus obtained by the measurement of the above storage modulus was determined, and maximum peak temperature of the tan $\delta$ was taken as glass transition temperature (°C).

<Manufacture of Pressure-Sensitive Adhesive Sheet for Pressure-Sensitive Adhesive Force Measurement>

Each of the active-energy-ray-curable pressure-sensitive adhesive compositions obtained in the above Examples 1 to 9 and Comparative Example 1 was applied to an easily adherably treated polyethylene terephthalate (PET) film (thickness: 125 $\mu$m) using an applicator so as to be a film thickness of 175 $\mu$m, irradiated with an ultraviolet ray under conditions of 80 W/cm (high-pressure mercury lamp)×18 cmHx2.04 m/min×3 pass (integration: 2,400 mJ/cm$^2$) in a desktop UV irradiation device ("conveyor-type desktop irradiation device" manufactured by Iwasaki Electric Co., Ltd.), and thus cured to thereby obtain an pressure-sensitive adhesive sheet for pressure-sensitive adhesive force measurement.

<Releasability>

(1) Initial Pressure-Sensitive Adhesive Force

After the obtained pressure-sensitive adhesive sheet was cut into a size of 25 mm×100 mm, it was attached under pressure to a glass plate as an adherend at 23°C under an atmosphere of a relative humidity of 50% by reciprocating a 2 kg rubber roller twice to manufacture a test piece. After the test piece was allowed to stand for 30 minutes under the same atmosphere, a 180° peeling test was performed at a peeling rate of 0.3 m/minute to measure initial pressure-sensitive adhesive force (N/25 mm). Also, the presence of adhesive deposit on the adherend was visually confirmed. Evaluation criteria are as follows.

(Evaluation Criteria)

Excellent ... Pressure-sensitive adhesive force was 9N or more and no adhesive deposit was confirmed
Good ... Pressure-sensitive adhesive force was 5N or more to less than 9 N but no adhesive deposit was confirmed
Moderate ... Pressure-sensitive adhesive force was less than 5 N but no adhesive deposit was confirmed
Bad ... Substrate interfacial peeling was generated

(2) Heat-Resistant Pressure-Sensitive Adhesive Force

A test piece was manufactured by the same method as in the case of the test piece manufactured in the above initial pressure-sensitive adhesive force measurement and the test piece was allowed to stand for 100 hours at 80°C under a dry atmosphere. Thereafter, a 180° peeling test was performed at a peeling rate of 0.3 m/minute at 23°C under an atmosphere of a relative humidity of 50% to measure heat-resistant pressure-sensitive adhesive force (N/25 mm). Also, the presence of adhesive deposit on the adherend was visually confirmed. Evaluation criteria are as follows.

(Evaluation Criteria)

Good ... No adhesive deposit was confirmed
Moderate ... Adhesive deposit was slightly confirmed
Bad ... Substrate interfacial peeling was generated

The following Table 2 shows the storage modulus at 23°C, glass transition temperature, measurement results of pressure-sensitive adhesive force, and measurement results of releasability of the pressure-sensitive adhesive layer obtained by curing each of the active-energy-ray-curable pressure-sensitive adhesive compositions of the above Examples 1 to 9 and Comparative Example 1.
[Table 2]

Table 2

| | Active-energy-ray-curable pressure-sensitive adhesive composition | | | | Storage modulus (Pa) | Glass transition temperature (°C) | Releasability | | | |
|---|---|---|---|---|---|---|---|---|---|---|
| | Urethane (meth)acrylate-based compound (A) | Ethylenically unsaturated monomer (B) | Photopolymerization initiator (C) | Thiol compound (D) | | | Initial pressure-sensitive adhesive force (N/25 mm) | Evaluation | Heat-resistant pressure-sensitive adhesive force (N/25 mm) | Evaluation |
| Example 1 | A-1 (100) | B-1 (43) | C-1 (4) | - | $1.50\times10^6$ | -37.5 | 3.48 | Medium | 20.42 | Medium |
| Example 2 | A-2 (100) | (43) | C-1 (4) | - | $1.54\times10^6$ | -34.9 | 9.06 | Excellent | 27.23 | Medium |
| Example 3 | A-3 (100) | B-1 (43) | C-1 (4) | - | $1,57\times10^6$ | -31.9 | 4.32 | Medium | 6.69 | Medium |
| Example 4 | A-4 (100) | B-1 (43) | C-1 (4) | - | $1.10\times10^6$ | -39.7 | 9.09 | Excellent | 22.74 | Medium |
| Example 5 | A-5 (100) | B-1 (43) | C-1 (4) | - | $1.02\times10^6$ | -35.8 | 16.9 | Excellent | 22.74 | Medium |
| Example 6 | A-6 (100) | B-1 (43) | C-1 (4) | - | $1.15\times10^6$ | -36.4 | 10.19 | Excellent | 6.05 | Medium |
| Example 7 | A-5 (100) | (43) | C-1 (4) | D-1 (0.5) | $1.00\times10^6$ | -34.7 | 10.3 | Excellent | 34.58 | Good |
| Example 8 | A-5 (100) | B-1 (43) | C-1 (4) | D-2 (0.5) | $1.02\times10^6$ | -34.8 | 9.78 | Excellent | 33.21 | Good |
| Example 9 | A-6 (100) | B-1 (43) | C-1 (4) | (D-2) 0.5 | $1.00\times10^6$ | -33.7 | 5.67 | Good | 26.52 | Good |
| Comparative Example 1 | A'-1 (100) | B-1 (43) | C-1 (4) | - | $0.95\times10^6$ | -22.9 | 8.63 | Good | 3.17 | Bad |

From the above evaluation results, it is understood that the active-energy-ray-curable pressure-sensitive adhesive compositions of Examples 1 to 9 where the storage modulus at 23°C of the pressure-sensitive adhesive layer obtained by curing is $1.0 \times 10^6$ or more and the glass transition temperature of the pressure-sensitive adhesive layer is -30°C or lower show excellent releasability when used as pressure-sensitive adhesives.

Moreover, it is understood that the active-energy-ray-curable pressure-sensitive adhesive compositions of Examples 4 to 9 containing a urethane (meth)acrylate-based compound where a hydroxy group-containing polyoxyalkylene mono(meth)acrylate is used as the hydroxyl group-containing (meth)acrylate-based compound (a3) are more excellent in the initial pressure-sensitive adhesive force when used as pressure-sensitive adhesives.

Furthermore, it is understood that the active-energy-ray-curable pressure-sensitive adhesive compositions of Examples 7 to 9 containing a thiol compound are very excellent in heat resistance when used as pressure-sensitive adhesives.

On the other hand, it is understood that the pressure-sensitive adhesive layer obtained using the active-energy-ray-curable pressure-sensitive adhesive composition of Comparative Example 1 where the storage modulus and the glass transition temperature both fall out of the desired range is poor in releasability when exposed to a high-temperature environment.

While the invention has been described in detail and with reference to specific embodiments thereof, it will be apparent to one skilled in the art that various changes and modifications can be made therein without departing from the spirit and scope thereof.

Incidentally, the present application is based on Japanese Patent Application No. 2014-134175 filed on June 30, 2014, and the contents are incorporated herein by reference. Also, all the references cited herein are incorporated as a whole.

Industrial Applicability

Since the active-energy-ray-curable pressure-sensitive adhesive composition of the present invention has releasability, it can be widely used as a pressure-sensitive adhesive sheet as a protective sheet or a temporary fixing sheet of surfaces of metal plates, glass plates, plastic plates, resin painted surfaces, and the like, in particular, a pressure-sensitive adhesive sheet for surface protection.

Moreover, it is also possible to use the active-energy-ray-curable pressure-sensitive adhesive composition of the invention as a sheet (tape) for electronic component fixation, a sheet (tape) for electronic component labeling, an attaching resin in optical displays or touch sensors. For example, it can be used for attachment of an optical display panel and a touch panel, attachment of an optical display panel and a protective panel, attachment of a touch panel and a protective panel, attachment of an optical display panel and an optical display panel, and attachment of an optical display panel and a parallax barrier.

## Claims

1. An active-energy-ray-curable pressure-sensitive adhesive composition comprising a urethane (meth)acrylate-based compound (A) obtained by reacting a polybutadiene-based polyol (a1), a polyvalent isocyanate-based compound (a2), and a hydroxyl group-containing (meth)acrylate-based compound (a3) and an ethylenically unsaturated monomer (B) (provided that (A) is excluded), wherein storage modulus at 23°C of a pressure-sensitive adhesive layer obtained by curing the composition by irradiation with an active energy ray is $1.0 \times 10^6$ or more and glass transition temperature of the pressure-sensitive adhesive layer is -30°C or lower.

2. The active-energy-ray-curable pressure-sensitive adhesive composition according to claim 1, wherein the polybutadiene-based polyol (a1) is a polybutadiene-based polyol containing 15 mol% or more of a polybutadiene structure which is obtained through 1,4-bond of butadiene.

3. An active-energy-ray-curable pressure-sensitive adhesive composition comprising a urethane (meth)acrylate-based compound (A) obtained by reacting a polybutadiene-based polyol (a1), a polyvalent isocyanate-based compound (a2), and a hydroxyl group-containing (meth)acrylate-based compound (a3) and an ethylenically unsaturated monomer (B) (provided that (A) is excluded), wherein the polybutadiene-based polyol (a1) is a polybutadiene-based polyol containing 15 mol% or more of a polybutadiene structure which is obtained through 1,4-bond of butadiene.

4. The active-energy-ray-curable pressure-sensitive adhesive composition according to any one of claims 1 to 3, wherein weight-average molecular weight of the urethane (meth)acrylate-based compound (A) is 5,000 to 100,000.

5. The active-energy-ray-curable pressure-sensitive adhesive composition according to any one of claims 1 to 4, which does not substantially contain a solvent.

6. A pressure-sensitive adhesive obtained by curing the active-energy-ray-curable pressure-sensitive adhesive composition according to any one of claims 1 to 5.

7. A pressure-sensitive adhesive sheet comprising a pressure-sensitive adhesive layer composed of the pressure-sensitive adhesive according to claim 6.

## INTERNATIONAL SEARCH REPORT

International application No. PCT/JP2015/068550

A. CLASSIFICATION OF SUBJECT MATTER
*C09J175/14*(2006.01)i, *C09J4/00*(2006.01)i, *C09J7/00*(2006.01)i, *C09J11/06*(2006.01)i

According to International Patent Classification (IPC) or to both national classification and IPC

B. FIELDS SEARCHED

Minimum documentation searched (classification system followed by classification symbols)
C09J175/14, C09J4/00, C09J7/00, C09J11/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2002-322454 A (Toppan Forms Co., Ltd.), 08 November 2002 (08.11.2002), claims 1, 2; paragraphs [0008], [0033] to [0036], [0046], [0050], [0073], [0074] (Family: none) | 1-7 |
| Y | WO 2009/028455 A1 (Lintec Corp.), 05 March 2009 (05.03.2009), claims 1, 3; paragraphs [0022], [0023] & US 2011/0212328 A1 & EP 2184332 A1 & CN 101821350 A & RU 2010106627 A | 1-7 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 September 2015 (07.09.15) | 15 September 2015 (15.09.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002309185 A
- JP 2014134175 A